# EUROPEAN PATENT APPLICATION

(11) **EP 0 663 524 A1**
(43) Date of publication of application: **19.07.1995**
(21) Application number: 94119067.0
(22) Date of filing: 02.12.1994
(51) Int. Cl.: F02K 7/14, F02K 9/64, F02K 9/52

(54) **Scram-stage missile**

(30) Priority: 15.12.1993 US 168446
(71) Applicant: ROCKWELL INTERNATIONAL CORPORATION, Seal Beach, California 90740-8250 (US)
(72) Inventor: Ortwerth, Paul James, Albuquerque, New Mexico 87111 (US); Bowcutt, Kevin Gerald, Irvine, California 92714 (US)
(74) Representative: Wächtershäuser, Günter, Prof. Dr.

(57) **Abstract**

A conical body scram missile having a plurality of scram engine modules (5) around the perimeter to make full use of the air flow around the body of the missile. The engine modules (5) are cooled by fuel flowing through channels in the engine walls. The engine modules produce a thrust to weight ratio of about 100 to 1.

## Description

### BACKGROUND OF THE INVENTION

### 1. Field of the Invention

This invention relates to scram missiles and more particularly to scram missiles having a conical vehicle body with engine modules around its perimeter.

### 2. Description of the Related Art

In the past most missiles had either solid or liquid engines which contained oxidizers. The tanks for carrying these oxidizers and the oxidizers themselves made the vehicle heavy and the tank shape was generally cylindrical and the engines were mounted in the rear of the vehicle. The resultant missiles were very large, heavy and expensive. The missiles had a low thrust to weight ratio and high propellant usage due to stored oxydizer which limited their performance.

Air breathing missiles have the advantage of not having to carry a supply of oxidizers making the missile lighter and smaller thus improving performance. Typically these missiles would have a cylindrical body and an engine attached under or on opposing sides of the missile, and generally toward or at the rear of the vehicle thus not taking full advantage of air flows and necessitating the use of larger less efficient engines.

### Summary of the Invention

The invention comprises a scram missile with a conical vehicle body having dual mode scramjet engine modules around the perimeter. The conical vehicle body provides compressed air to the engines around the entire vehicle perimeter for maximum efficiency. This improves the thrust to weight ratio and allows a smaller, lighter weight, less expensive vehicle to be built. The thrust to weight ratio is above 40 to 1.

### Objects of the Invention

To provide a missile having a structure with the lowest surface area and the lowest weight possible.

To provide a missile having the highest possible thrust per pound of air flowing through the engine.

To produce the highest possible efficiency for a given amount of fuel while keeping down weight of the overall missile.

To produce an engine module wherein the thrust to weight ratio is above 40 to 1.

To produce an engine module wherein the thrust to weight ratio is on the order of 100 to 1.

To produce air-breathing engines for a mach-3 through mach-15 vehicle.

To provide a quick response, high-speed intercept missiles.

To provide a missile with a quick launch capability for striking targets.

To provide a missile with a quick launch capability for quick launch of satellites.

To provide a research vehicle for advanced scramjet designs.

Other objects, advantages and novel features of the present invention will become apparent from the following detailed description of the invention when considered in conjunction with the accompanying drawing.

### Brief Description of the Drawings

Figure 1 is a side view cross section of a scram-stage missile with 3 stages.
Figure 2 is a perspective view of a scram-stage missile with 3 stages.
Figure 3 is a perspective view of the scramjet power stage.
Figure 4 is a rear cross sectional view of an assembly of the engine modules.
Figure 5 is a side view of an engine module.
Figure 6 is a perspective of hyper mixer ramps in the engine module and also shows cooling channels in the cooled side-walls.
Figure 7 is a cross section side view of an engine module side-wall showing hyper mixer nozzles.

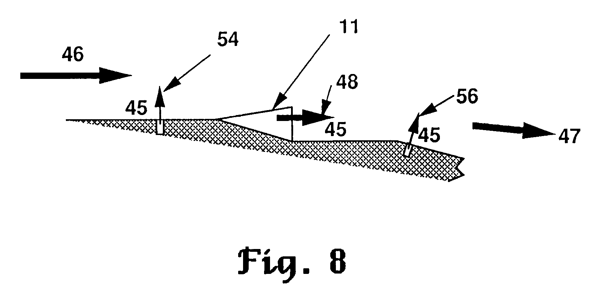

Figure 8 is a schematic of fuel injectors for low and high-speed operation.
Figure 9 is a schematic view of fuel distribution.
Figure 10 is a top view of the cowl external surface.

### Detailed Description of the Preferred Embodiment

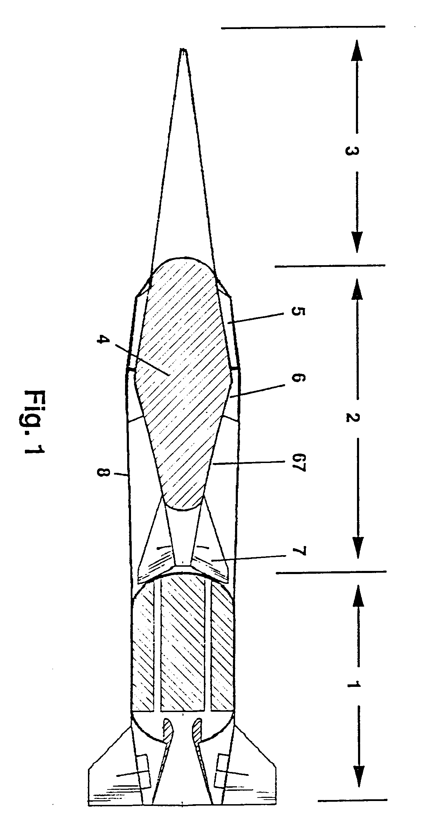

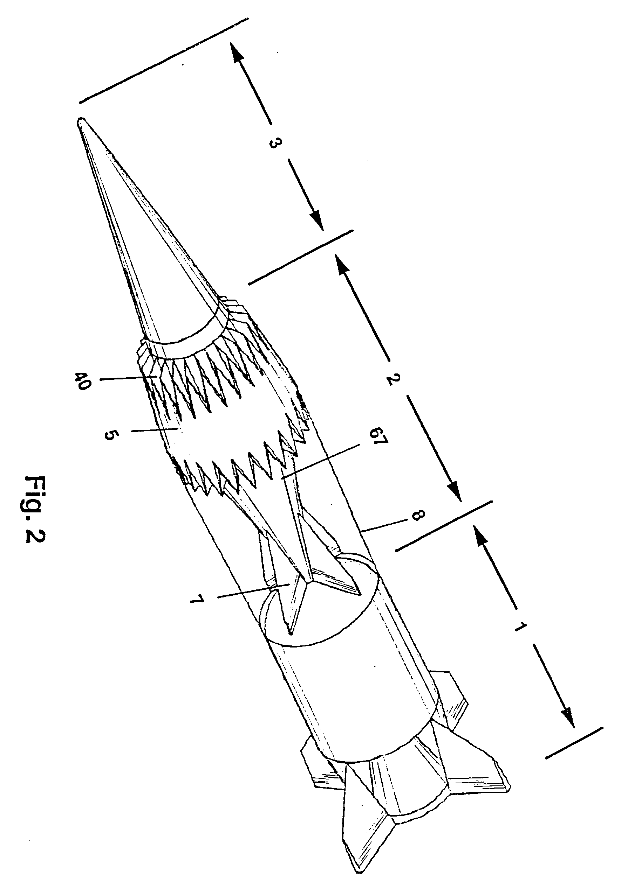

Figures 1 and 2 show the basic stages of the missile. The first stage 1, being a conventional rocket booster with control guidance fins. The second stage, or scram-stage 2, is a conical vehicle with a wrap-around engine modules having a high air-breathing efficiency. The third stage, 3 is the payload, which is integrated into the nose of the conical vehicle forming the forebody of the missile. Inside the scram-stage 2, there is a conically shaped fuel tank 6, containing an endothermic hydrocarbon fuel 4, however other fuel types could be used depending on flight requirements. The first stage and second stage are connected by a shroud 8, which transmits thrust loads into the scram-stage 2, from the first stage 1.

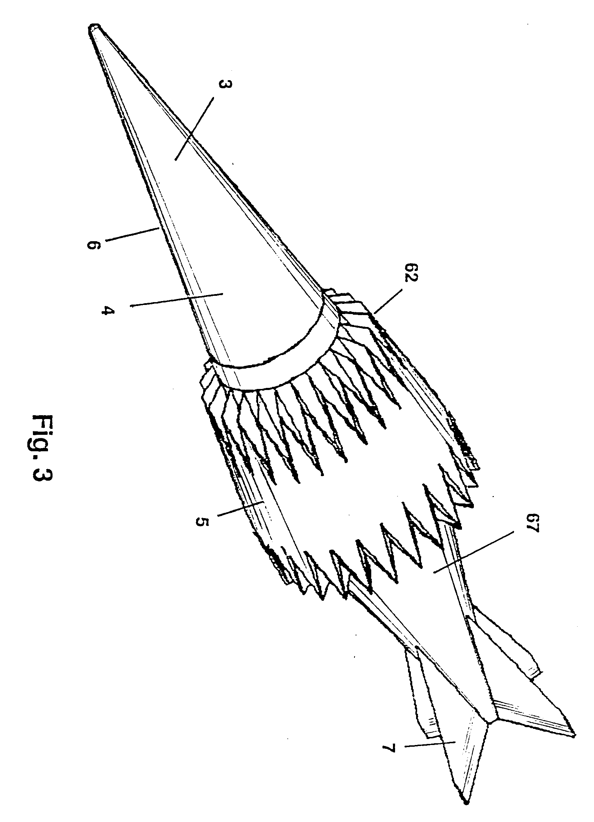

As best seen in figure 3 engine modules 5, are wrapped around the scram-stage 2, which is a conical vehicle. The engine modules 5, are modular with side-wall compression inlets which form a very efficient lightweight structure. The fuel tank 6, is a pressure-fed system which is pressure stiffened and is part of the missile structure.

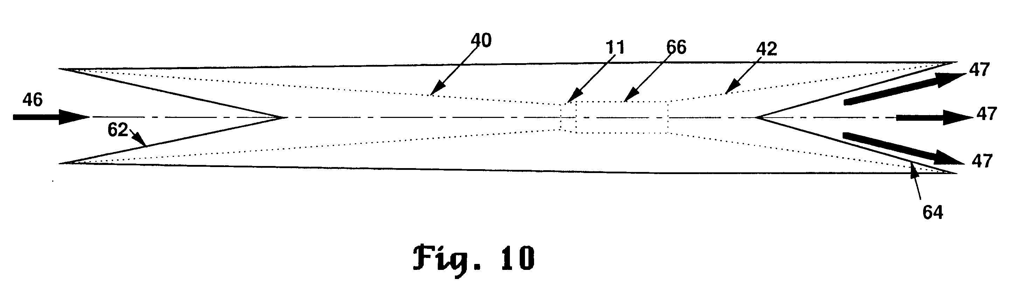

Also shown are the missile control fins 7. The leading edges 50 of the engine modules 5, are swept as well as the cowl leading edges 62 as best seen in figure 10. The swept leading edges 50 and 62 help the self-starting inlet to start and reduce the leading edge heat transfer at high speed from that of normal leading edges. The trailing edges of the cowl 64, are also swept as they enclose the nozzle 42, and that also helps to reduce weight, heat transfer and drag.

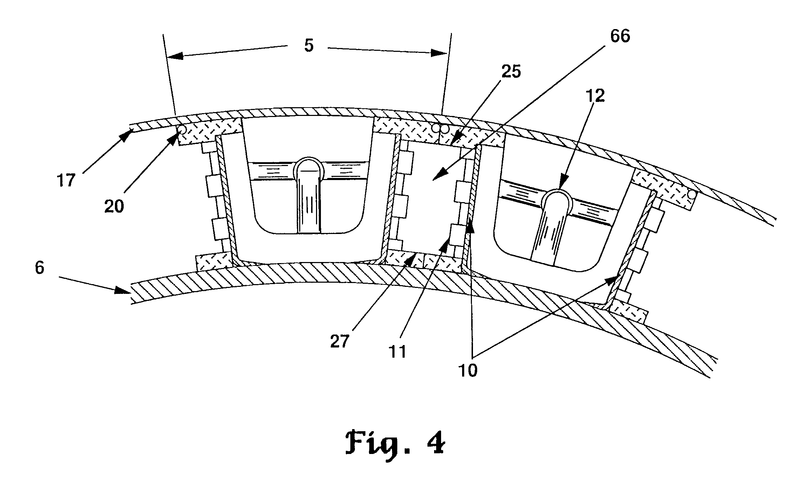

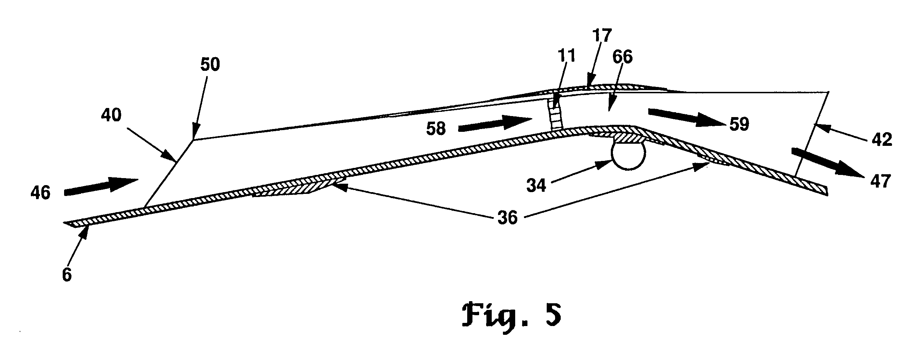

Figure 4 shows a rear cross sectional view of the engine modules 5, which are arranged around the perimeter of the conical vehicle on the tank shell 6. The series of small engine modules 5, around the vehicle result in a lightweight and low cost power plant. When these engine modules are placed together they form a ring on the perimeter of the fuel tank 6. Each engine module 5, contains a structural hard-back stiffener 15, cooled side-walls 10, a joint cooling tube 20, a cowl inner surface 25, a ramp lower surface 27 and a fuel manifold 12. When these modules are attached to each other, they form between them the air inlet 40, combustor 66, and nozzle 42, as best seen in figures 5 and 10. Figure 4 shows the inside of the combustor 66 having hyper mixing ramps 11. Hat band 17 is wrapped around the engine modules 5.

Figure 5 shows a side view of an engine module 5, mounted on the fuel tank 6, the main fuel distribution manifold 34, and on the inside of the fuel tank 6, there are various attachment stiffeners 36. The engine modules 5, are fastened with fasteners to the stiffeners 36. Also shown are the the hyper mixing ramps 11, the combustor 66, the main fuel distribution manifold 34, the fuel manifolding 12, the air inlet 40, and the thrust producing nozzle 42. The leading edge 50 is cooled as shown in figure 5 and is swept back at a high angle.

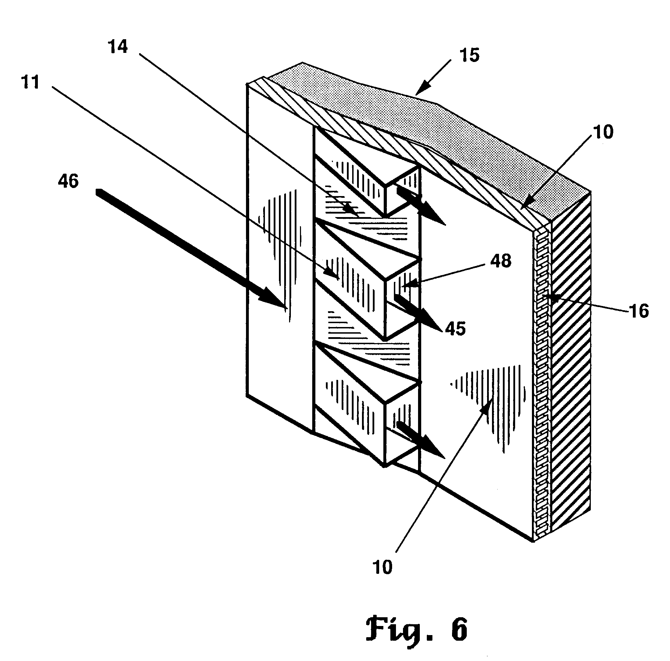

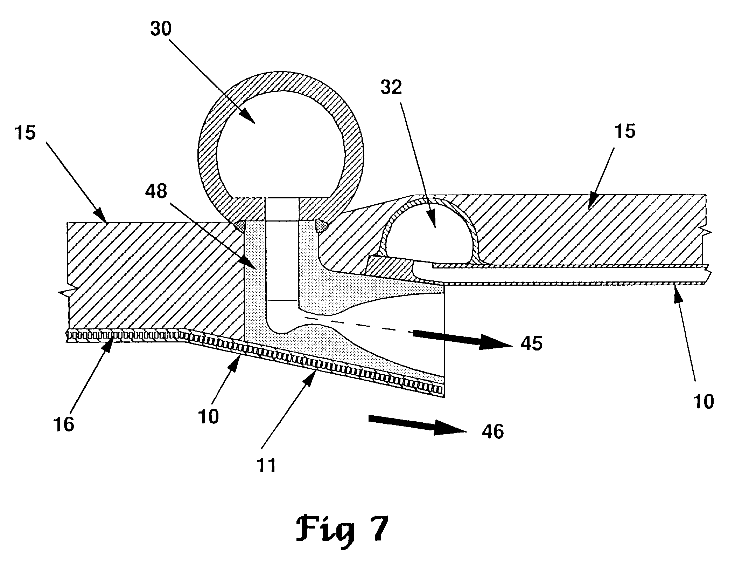

As the vehicle moves forward at high rates of speed the air is compressed by the conical front of the vehicle, tank 6, resulting in compressed air flow 46. Air flow 46 is compressed by the air inlet 40 which squeezes the air into the smaller cross section of the combustor 66. This raises the pressure and the temperature of the air. When fuel is injected through the main fuel injector nozzles 48, it rapidly mixes and burns in the combustor 66. This high-pressure, hot combustion gas is then expanded through the thrust-producing nozzle 42 internally to the engine module 5, and then further expanded over the aft portion of the vehicle 67 shown in figures 1 and 3. Figure 6, is a perspective showing the fuel flow 45 exiting the main fuel injector nozzle portion 48, of the hyper mixing ramps 11, the fuel flow 45 exits into the combustor 66 at a very high speed, which extracts work from the heated fuel producing additional thrust when compared to side-wall fuel injectors. The hyper mixing ramps 11 generate turbulence, causing a swirling flow that rapidly mixes the air 46 with the fuel 45 in a very short length, which reduces the heat transfer to the cooled side-walls 10. The cooled side-walls 10, which contain coolant channels 16, are used to cool the leading edge of the engine modules 50, the combustor 66, the thrust producing nozzle 42 and other parts needing cooling as is well understood in the art. The heat from the combustor and nozzle is used to preheat the fuel for better combustion and improved performance as is well understood in the art. The ability to use an endothermic fuel in microchannel heat exchangers such as cooled side-walls 10, is very important for protecting the engine thermally. As can be seen by comparing figures 6 and 7 the direction in which the channels 16 go can be changed based on design considerations.

The desirable properties of the fuel in this missile are good fluidity at low temperature, highly energetic per unit volume, endothermic in that it reacts in the cooled side-walls 10 to absorb extra heat, and that it cracks in the cooled side-walls into light hydrocarbon products which burn well.

Figure 7 shows how the injection manifold 30 can be joined to the main fuel injection nozzle 48, having supersonic fuel flow 45 by brazing the side-walls which are joined to the front section and also to the stiffener 15, which may be a titanium honeycomb. The injection manifold 30 is fed by hot fuel gas in a gaseous state after it has run through all of the cooled side-walls 10 and collected by a inlet manifold 32.

The cowl leading edges actually cut the missile through the air and therefore receive very high heating rates and they need special consideration for cooling.

To cover a range of operation of the engine from mach 3 to 15 several stages of fuel injection are used. The main fuel injector nozzles 48, operate in the scramjet mode from high supersonic through the hypersonic speed range, from mach 6 to 15. Two additional fuel injection stages are provided. Beginning at mach 3 fuel is injected from a pilot fuel injector 54. Pilot fuel is generally a liquid and its spray impinges on the hyper mixing ramps 11, where it is evaporated, and then flows over the base of the main fuel injector nozzles 48. The main fuel injector nozzles 48, have a blunt recirculation zone which holds the flame. Additional fuel is injected in the combustor 66, and the remaining fuel to provide additional thrust from mach 3 to 6 is injected through the dual-mode fuel injector 56.

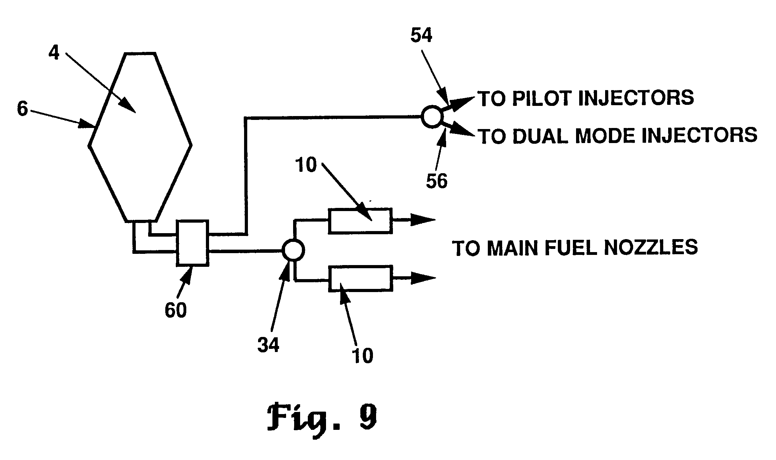

A schematic of the fuel injection system is shown in Figure 9, where the fuel 4, from tank 6, flows to two circuits controlled by on-off valve 60. The fuel 4, can be directed to a manifold not shown in the figure which distributes fuel 4, to the pilot fuel injector 54, and the dual-mode fuel injector 56. That fuel can be turned off at high mach number, wherein the fuel goes to the main distribution manifold 34, and is heated and gasified in the cooled side-walls 10, sometimes called the heat exchanger, where it is directed in each engine module 5, to the main fuel injector nozzles 48.

Figure 10 is a top view of the cowl external surface. It gives an overview of the engine module 5, from the air flow 46, at the leading edge of the cowl 62, to the exiting of the combustion gasses 47, at the trailing edge of the cowl 64. Phantomed in the drawing is the air inlet 40, the hyper mixing ramps 11, the combustor 66, and the thrust producing nozzle 42.

This scram-stage propulsion system works by capturing and compressing large amounts of air in the atmosphere burning that high-pressure air and expanding it in a nozzle. This operation is very similar to most jet engines and is often called a Brayton cycle. Special shapes are used in the engine module 5, which are very efficient in processing the air. The thrust is created by the much higher pressures in the thrust producing nozzle 42, than in the air inlet 40, owing to the heat partly from the cooled side-walls 10, further raising the pressure in the combustor 66. The heat exchange process that occurs when cooling the engine with the fuel, which also gasifies this fuel, allows one to generate additional thrust and convert the friction drag which creates the frictional heat into thrust in the fuel injection nozzles 48, 54, and 56. The air inlet 40, besides having an efficient compression ratio or contraction ratio also has features which enable it to enter the air cleanly, owing to a very highly swept leading edge of the engine modules 50, which must be blunt in order to be cooled but owing to its sweep back, the drag and the heat transfer is reduced substantially. The inlet angles should be on the order of 45 degrees or greater relative to the local air flow on the cone. This sweep back eliminates very undesirable strong shock-on-shock interactions. Weak shock on shock interactions reduce the inlet heat loads and enable the inlets to operate at an overspeed condition wherein the bow shock is actually entering the inlet. By operating in the overspeed condition optimum sizing of the engines and the amount of air capture at a given mach number is possible. With larger air capture and higher thrust, acceleration at a very high rate is obtained.

The swept back notch in the cowl leading edges 62, enables air to be spilled at low speed enabling the air inlet 40, to start smoothly at mach 3. The swept cowl leading edge 62, prevents air spillage at higher mach numbers, increasing the efficiency of the engine at high speed. The nozzle cowl trailing edge 64, is also cut back in order to reduce weight and heat transfer and drag losses in the nozzle, but still contain the expansion pressure as the hot combustion gases expand to the vehicle thrust producing nozzle 42. Because of lower kinetic energy the relatively higher amount of heat of combustion per pound of air captured at low speed, the engine operates in what's called a dual mode or a subsonic or transonic combustion mode at low speed, mach 3 to 6. This is the most efficient part of the cycle thermodynamically, but also the range in which air is spilled out of the air inlet 40. The higher efficiency compensates for the loss of air flow due to the spillage. Another enabling feature is the fact that this engine can be cooled with the hydrocarbon fuel without exceeding the ideal stoichiometric fuel/air ratio. This is due to the endothermic reactions which absorb heat in the heat exchanger walls. Extra heat may occur locally in hot spots. It is also advantageous to not cool all the surfaces of the engine for weight and complexity reasons, therefore, some of the engine surfaces may be ablatively cooled.

One of the most important applications of this device would be to accelerate a payload to a desired average velocity of 5 kilometers per second, or mach 15. In order to put this on an aircraft efficiently and to bring many of these to bear on a given target, for example, as a boost-phase intercept mission, one wants the highest efficiency over the widest speed range to accelerate the payload to that velocity. We enable that to be done by using the scramjet engine, which works efficiently over the speed range of mach 3 to 15 and is in fact the most efficient propulsion cycle known at this time. Some of the features of the design that enhance this efficiency is to use a conical vehicle which has a very large volume-to-surface ratio. That means that we have the least amount of weight in the structure, because we also have a low surface area and a low friction drag. In fact, when counting the total drag, which includes the pressure drag on the vehicle, a conical vehicle for this surface-constrained missile than has the lowest overall drag per unit or air captured by the engine. The engine is fully wrapped to capture all the air that the cone flies through and therefore we obtain the highest overall mass capture and lowest drag for any air capture. This increases the overall efficiency of the integrated propulsion and vehicle system. It gives the vehicle the highest propellant fraction that is available in any shape that one could provide for this missile and the lowest heat sink. The side-wall compression engine which modularizes the engine takes advantage of all the physics and scaling required in the flow path to make the engine perform well by providing the lowest surface and the lowest weight in the structure. Because it has the lowest surface area it has the lowest heat transfer. This improves the efficiency of the engine and gives one the highest thrust per pound of air flowing through the engine. The combination of these factors allows one to integrate the engine and the vehicle to produce the highest efficiency possible for a given amount of fuel and this is very important in keeping down the weight of the overall missile substantially.

Another feature of the design which is helpful in overall efficiency is the thrust producing nozzle 42 shape which includes a turn (shown in figure 5 by vectors 58 and 59) in the combustor 66. The three-dimensional expansion internally results in a recompression of the combustion gasses 47, as it meets the aft portion of the vehicle 67. This recompression feature while actually not often thought of in an ideal way as being performance-enhancing is in hypersonic nozzles which are length limited and when they are too short to achieve ideal expansion, it can benefit greatly by this three-dimensional expansion with the recompression process in the middle the flow expansion. In this way, we can achieve close to 85 or 90% of ideal performance of the nozzle and while we achieve this high fraction of ideal pressure force generating thrust, we do it with a nozzle that is short and therefore reduces friction drag and heat transfer on that nozzle which is an important design consideration. Stability and control of the vehicle is obtained by deflecting either fins in the exhaust very similar to what was done in the early V-2 rocket days or by articulating or moving flaps off of the nozzle surface at the very tip of the tail cone. This far aft position of these actuator fins 7, minimizes their size by increasing the moment arm or the amplification of the moment or turning forces that are produced by deflection of these fins or flaps.

The cone angles of the conic vehicle are kept relatively shallow such that the total drag is roughly equally split between pressure drag and friction drag and minimizing the surface area is also balanced by this angle, large angles greater than 8 or 9 degrees would create large shock losses on the air processed by the engine. Shallower angles would produce a heavier vehicle per unit volume of fuel carried and also increase skin friction drag on the vehicle. The inlet angles are also kept shallow on the order of 5 degrees for the same reason in that they tend to evenly split the pressure drag and viscous drag for a given contraction ratio thereby providing for the lowest overall inefficiency in compressing the air. Nozzle expansion angles are in general kept shallow. The nozzle chordal angle should be kept on the order of 12 degrees or lower. This provides for a minimum divergence losses in the nozzle in the hypersonic regime.

Another important angle to consider is the hyper mixing ramp 11, or our ramp angles in the combustor 66, which should be on the order of 10 to 12 degrees.

Obviously, many modifications and variations of the present invention are possible in light of the above teachings. It is therefore to be understood that, within the scope of the appended claims, the invention may be practiced otherwise than as specifically described.

## Claims

1. A scram stage missile comprising:
a conical vehicle having;
a plurality of scram engine modules forming a band around the circumference of the cone conical vehicle.

2. A scram stage missile as in claim 1 wherein:
the thrust to weight ratio of the engine modules is above about 40 to 1.

3. A scram stage missile as in claim 1 wherein:
a booster stage is attached to the scram stage to provide acceleration for the scram stage missile.

4. A scram stage missile as in claim 1 wherein:
a payload is attached to the scram stage missile.
